# EUROPÄISCHE PATENTANMELDUNG

(11) **EP 3 725 194 A1**
(43) Veröffentlichungstag der Anmeldung: **21.10.2020**
(21) Anmeldenummer: 20168970.0
(22) Anmeldetag: 09.04.2020
(51) Int. Cl.: A47J 37/06

(54) **GRILLGERÄT ZUM GAREN ODER GRILLEN VON GRILLGUT**

(30) Priorität: 16.04.2019 DE 202019001718 U
(71) Anmelder: ACTIVA Grillküche GmbH, 95100 Selb (DE)
(72) Erfinder: Schleicher, Jakob, 95100 Selb (DE)
(74) Vertreter: Isarpatent

(57) **Zusammenfassung**

Die vorliegende Erfinung schafft ein Grillgerät (1) zum Garen oder Grillen von Grillgut, umfassend ein Gehäuse (10) mit einem Grillinnenraum (12), welcher durch eine offene Frontseite (12a) zugänglich ist, einen Heizstrahler (14), der an einer Decke (16) des Grillinnenraums (12) angeordnet ist, einen im Grillinnenraum (12) angeordneten Grillrost (18), und eine im Grillinnenraum (12) angeordnete Haltevorrichtung (20) zum Halten des Grillrosts (18), dadurch gekennzeichnet, dass die Haltevorrichtung (20) eine Mehrzahl von an gegenüberliegenden Seitenwänden (22, 24) des Grillinnenraums (12) ausgebildeten, gestanzten Vorsprüngen (26a, 126a, 26b, 126b, 26c, 126c, 28a, 128a, 28b, 128b, 28c, 128c, 30a, 130a, 30b, 130b, 30c, 130, 32a, 132a, 32b, 132b, 32c, 132c, 34a, 134a, 34b, 134b, 34c, 134c) aufweist.

## Beschreibung

### Stand der Technik

Die vorliegende Erfindung betrifft ein Grillgerät zum Garen oder Grillen von Grillgut.

Herkömmliche Grillgeräte zum Garen oder Grillen von Grillgut, insbesondere Oberhitzegrillgeräte, umfassen ein Gehäuse mit einem Grillinnenraum, welcher durch eine offene Frontseite zugänglich ist, einen Heizstrahler, der an einer Decke des Grillinnenraums angeordnet ist, einen im Grillinnenraum angeordneten Grillrost und eine im Grillinnenraum angeordnete Haltevorrichtung zum Halten des Grillrosts.

DE 10 2017 102 892 A1 offenbart ein Grillgerät, mit einer außerhalb des Grillinnenraums angeordneten Haltevorrichtung für den Grillrost, wobei die Haltevorrichtung mit dem Grillrost über einen Rostträger verbunden ist, der durch die offene Frontseite des Grillinnenraums und als ein in den Grillinnenraum ragender Kragträger ausgebildet ist.

Eine solche Haltevorrichtung ist technisch komplex und benötigt eine Vielzahl von ineinandergreifenden Bauteilen. Zudem besteht die Möglichkeit, dass die Haltevorrichtung durch Abnutzung oder unsachgemäße Behandlung beispielsweise blockiert oder keine sichere Halterung bietet.

Des Weiteren sind Grillgeräte bekannt, bei welchen an den Seitenwänden Schubleisten festgeschweißt oder angenietet sind, die zur Halterung des Grillrosts in dem Grillinnenraum des Grillgeräts dienen.

Es besteht somit ein Bedarf nach einem Grillgerät, welches eine verbesserte Halterung des Grillrosts in dem Grillinnenraum ermöglicht.

### Offenbarung der Erfindung

Die vorliegende Erfindung betrifft ein Grillgerät nach Patentanspruch 1.

Weitere Ausführungsformen der vorliegenden Erfindung sind Gegenstand der weiteren Unteransprüche und der nachfolgenden Beschreibung unter Bezugnahme auf die Figuren.

Ein Aspekt der vorliegenden Erfindung bezieht sich auf ein Grillgerät zum Garen oder Grillen von Grillgut, umfassend ein Gehäuse mit einem Grillinnenraum, welcher durch eine offene Frontseite zugänglich ist, einen Heizstrahler, der an einer Decke des Grillinnenraums angeordnet ist, einen im Grillinnenraum angeordneten Grillrost, und eine im Grillinnenraum angeordnete Haltevorrichtung zum Halten des Grillrosts, wobei die Haltevorrichtung eine Mehrzahl von an gegenüberliegenden Seitenwänden des Grillinnenraums ausgebildeten, gestanzten Vorsprüngen aufweist.

Die Idee der vorliegenden Erfindung besteht darin, durch Ausbilden der Haltevorrichtung durch die an gegenüberliegenden Seitenwänden des Grillinnenraums vorgesehenen gestanzten Vorsprünge eine verbesserte Einsatztechnik des Grillrosts in den Grillinnenraum vorzusehen, welche im Gegensatz zu herkömmlichen Lösungen wie einem Festschweißen oder Annieten von Schubleisten an den Seitenwänden eine vereinfachte Reinigbarkeit des Grillinnenraums des Grillgeräts ermöglicht.

Gemäß einer bevorzugten Weiterbildung ist vorgesehen, dass eine erste Seitenwand des Grillinnenraums zumindest einen ersten gestanzten Vorsprung und einen zweiten gestanzten Vorsprung aufweist, welche in einer zur Längsrichtung des Grillgeräts parallelen Ebene angeordnet sind.

Somit weist der Grillinnenraum lediglich zumindest zwei gestanzte Vorsprünge im Bereich der ersten Seitenwand auf, welche als Auflagefläche für den Grillrost dienen, wodurch eine einfache Reinigbarkeit der Oberfläche der ersten Seitenwand gewährleistet ist.

Gemäß einer weiteren bevorzugten Weiterbildung ist vorgesehen, dass eine zur ersten Seitenwand im Montagezustand gegenüberliegend angeordnete zweite Seitenwand des Grillinnenraums zumindest einen ersten gestanzten Vorsprung und einen zweiten gestanzten Vorsprung aufweist, welche in einer zur Längsrichtung des Grillgeräts parallelen Ebene angeordnet sind.

Die zweite Seitenwand weist somit ebenfalls lediglich zumindest zwei gestanzte Vorsprünge auf, wodurch die Oberfläche der zweiten Seitenwand eine einfache Reinigbarkeit aufweist.

Gemäß einer weiteren bevorzugten Weiterbildung ist vorgesehen, dass die erste Seitenwand und die zweite Seitenwand des Grillinnenraums einen dritten gestanzten Vorsprung aufweisen, welcher in derselben Ebene wie der erste gestanzte Vorsprung und der zweite gestanzte Vorsprung angeordnet ist. Somit kann in vorteilhafter Weise eine weiterhin verbesserte Auflage des Grillrostes ermöglicht werden.

Gemäß einer weiteren bevorzugten Weiterbildung ist vorgesehen, dass die erste Seitenwand und die zweite Seitenwand des Grillinnenraums eine Mehrzahl von Reihen von Vorsprüngen aufweisen, wobei der erste gestanzte Vorsprung der ersten Reihe zu einem ersten gestanzten Vorsprung jeder weiteren Reihe in einer zur Höhenrichtung des Grillgeräts parallelen Ebene angeordnet ist.

Eine solche regelmäßige Anordnung der Vorsprünge ermöglicht in vorteilhafter Weise eine einfache Einfügbarkeit des Grillrostes als auch eine effiziente Reinigung des Grillinnenraums durch einen Benutzer.

Gemäß einer weiteren bevorzugten Weiterbildung ist vorgesehen, dass der zweite gestanzte Vorsprung der ersten Reihe zu einem zweiten gestanzten Vorsprung jeder weiteren Reihe in einer zur Höhenrichtung des Grillgeräts parallelen Ebene angeordnet ist, und wobei der dritte gestanzte Vorsprung der ersten Reihe zu einem dritten gestanzten Vorsprung jeder weiteren Reihe in einer zur Höhenrichtung des Grillgeräts parallelen Ebene angeordnet ist.

Eine solche regelmäßige Anordnung der Vorsprünge ermöglicht in vorteilhafter Weise eine einfache Einfügbarkeit des Grillrostes als auch eine effiziente Reinigung des Grillinnenraums durch einen Benutzer.

Gemäß einer weiteren bevorzugten Weiterbildung ist vorgesehen, dass die erste Reihe, eine zweite Reihe und eine dritte Reihe der Mehrzahl von Reihen von Vorsprüngen einen gleichmäßigen ersten Abstand voneinander aufweisen. Dies ermöglicht in vorteilhafter Weise ein Grillen und/oder Garen von Lebensmitteln in einem vorgegebenen Temperaturbereich.

Gemäß einer weiteren bevorzugten Weiterbildung ist vorgesehen, dass eine vierte Reihe der Mehrzahl von Reihen von Vorsprüngen einen gegenüber dem ersten Abstand vergrößerten zweiten Abstand von der benachbarten dritten Reihe aufweist, und wobei eine fünfte Reihe der Mehrzahl von Reihen von Vorsprüngen einen gegenüber dem zweiten Abstand vergrößerten dritten Abstand von der benachbarten vierten Reihe aufweist.

Eine solche Positionierung bzw. Anordnung der Reihen relativ zueinander ermöglicht eine vorgegebene Temperaturabstufung in dem Grillinnenraum des Grillgeräts, welche somit je nach Einsatzzweck bzw. Temperaturvorgabe beim Garen und/oder Grillen eine entsprechende Verwendung durch den Benutzer ermöglicht.

Gemäß einer weiteren bevorzugten Weiterbildung ist vorgesehen, dass die Mehrzahl von an gegenüberliegenden Seitenwänden des Grillinnenraums ausgebildeten, gestanzten Vorsprüngen identische Abmessungen aufweisen und gegenüber einer Mittellängsebene des Grillinnenraums spiegelsymmetrisch angeordnet sind. Somit kann in vorteilhafter Weise eine einfache und kostengünstige Herstellbarkeit ermöglicht werden, da sämtliche Seitenwände identisch sind.

Gemäß einer weiteren bevorzugten Weiterbildung ist vorgesehen, dass die Mehrzahl von an gegenüberliegenden Seitenwänden des Grillinnenraums ausgebildeten, gestanzten Vorsprüngen einen gewölbten, im Wesentlichen konvexen, Querschnitt aufweisen.

Somit kann in vorteilhafter Weise zwischen dem Grillrost und den jeweiligen Vorsprüngen im eingefügten Zustand des Grillrosts in den Grillinnenraum Linienkontakt gebildet werden. Die geringe Auflagefläche des Grillrosts auf den gestanzten Vorsprüngen ermöglicht somit ferner in vorteilhafter Weise eine reibungsarme Einfügbarkeit bzw. Herausziehbarkeit des Grillrosts in den Grillinnenraum bzw. aus dem Grillinnenraum heraus.

Die hierin beschriebenen Merkmale des Grillgeräts sind für die Verwendung mit jeder Art von Grillvorrichtung offenbart.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen. Nachfolgend wird die Erfindung anhand exemplarischer Ausführungsformen näher erläutert, die in den schematischen Abbildungen der Zeichnungen angegeben sind.

Es zeigen:
- Fig. 1: eine Explosionsdarstellung eines Grillgeräts gemäß einer bevorzugten Ausführungsform der Erfindung;
- Fig. 2: eine schematische Ansicht des Grillgeräts gemäß der bevorzugten Ausführungsform der Erfindung;
- Fig. 3: eine schematische Ansicht einer ersten Seitenwand des Grillgeräts gemäß der bevorzugten Ausführungsform der Erfindung; und
- Fig. 4: eine schematische Ansicht einer zweiten Seitenwand des Grillgeräts gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

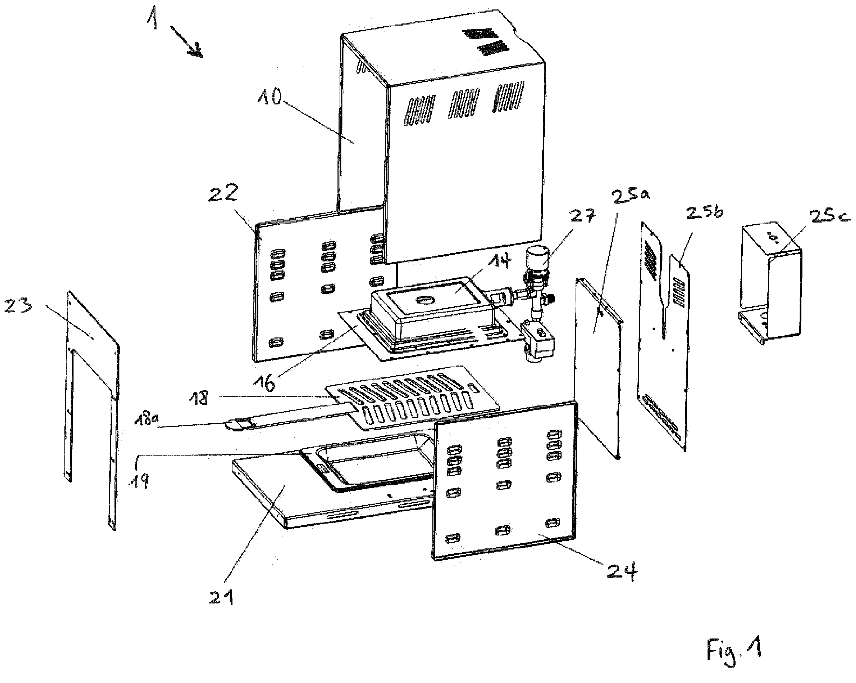

Fig. 1 zeigt eine Explosionsdarstellung eines Grillgeräts gemäß einer bevorzugten Ausführungsform der Erfindung.

Das Grillgerät 1 zum Garen oder Grillen von Grillgut umfasst ein Gehäuse 10 mit einem (in Fig. 1 nicht gezeigten) Grillinnenraum, welcher durch eine offene Frontseite zugänglich ist.

Ferner weist das Grillgerät 1 einen Heizstrahler 14 auf, der an einer Decke 16 des Grillinnenraums angeordnet ist. Darüber hinaus weist das Grillgerät einen im Grillinnenraum angeordneten Grillrost 18 mit einem daran angebrachten Griff 18a auf.

Ferner weist das Grillgerät eine im Grillinnenraum angeordnete Haltevorrichtung zum Halten des Grillrosts 18 auf. Die Haltevorrichtung weist eine Mehrzahl von an gegenüberliegenden Seitenwänden 22, 24 des Grillinnenraums ausgebildeten, gestanzten Vorsprüngen auf.

Ferner weist das Grillgerät 1 eine Bodenplatte 21 und eine auf der Bodenplatte 21 angeordnete Grillwanne bzw. Tropfbehälter 19 auf.

Darüber hinaus weist das Grillgerät 1 eine Frontabdeckplatte 23 auf, welche im Montagezustand die offene Frontseite des Grillinnenraums definiert.

Ferner weist das Grillgerät 1 eine Heckplatte 25a auf, welche eine Hinterwand des Grillinnenraums ausbildet. Zusätzlich weist das Grillgerät 1 eine weitere Gehäuseheckwand 25b auf, da das Gehäuse 10 nach vorne und hinten hin offen ist.

Darüber hinaus weist die Grillvorrichtung 1 ein Regelventil 27 zum Regeln einer Gasdurchflussmenge zum Heizstrahler 14 auf, da es sich in der vorliegenden Ausführungsform bei dem Grillgerät um ein Gasgrillgerät handelt. Alternativ kann das Grillgerät beispielsweise durch ein elektrisch beheizbares Grillgerät ausgebildet sein. Ferner ist eine weitere Abdeckung 25c vorgesehen, welche das Regelventil 27 unterhalb des Reglers entsprechend abdeckt.

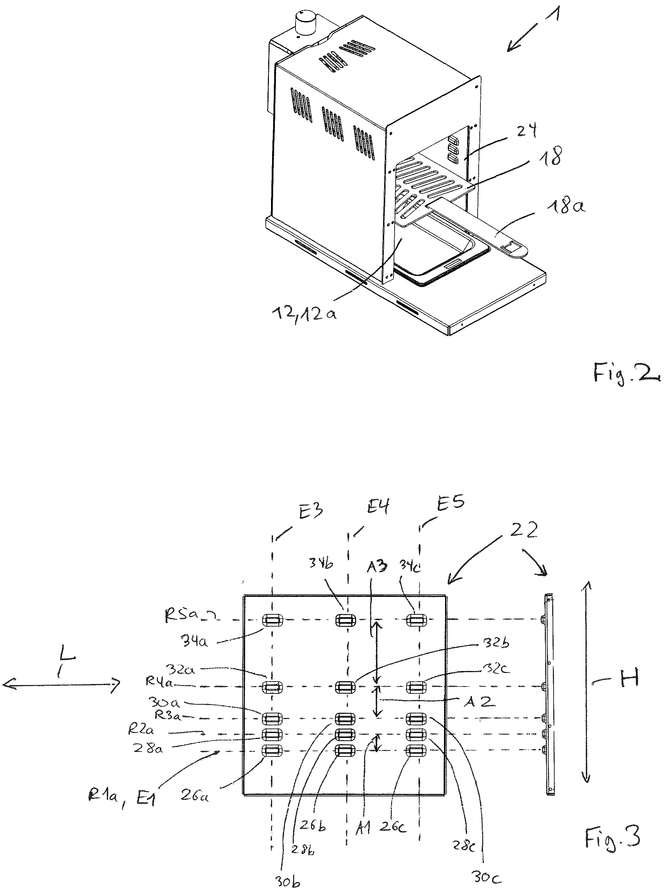

Fig. 2 zeigt eine schematische Ansicht des Grillgeräts gemäß der bevorzugten Ausführungsform der Erfindung.

In der vorliegenden Darstellung ist das Grillgerät 1 im Montagezustand gezeigt. Der Grillrost 18 ist in den Grillinnenraum 12 durch die offene Frontseite 12a eingefügt. Im Bereich der zweiten Seitenwand 24 des Grillinnenraums 12 sind eine Mehrzahl von gestanzten Vorsprüngen sichtbar.

Fig. 3 zeigt eine schematische Ansicht einer ersten Seitenwand des Grillgeräts gemäß der bevorzugten Ausführungsform der Erfindung.

Die erste Seitenwand 22 des Grillinnenraums 12 weist in der vorliegenden Ausführungsform eine erste Reihe R1a auf, welche einen ersten gestanzten Vorsprung, einen zweiten gestanzten Vorsprung und einen dritten gestanzten Vorsprung aufweist, welche in einer zur Längsrichtung L des Grillgeräts 1 parallelen Ebene E1 angeordnet sind.

Des Weiteren sind eine zweite Reihe R2a, eine dritte Reihe R3a, eine vierte Reihe R4a und eine fünfte Reihe R5a vorgesehen, welche in weiteren zur Längsrichtung L des Grillgeräts parallelen Ebenen angeordnet sind.

Die zweite Reihe R2a, die dritte Reihe R3a, die vierte Reihe R4a und die fünfte Reihe R5a weisen analog zum ersten gestanzten Vorsprung 26a der ersten Reihe R1a ebenfalls jeweils einen ersten gestanzten Vorsprung 28a, 30a, 32a, 34a auf.

Ferner weisen die zweite Reihe R2a, die dritte Reihe R3a, die vierte Reihe R4a und die fünfte Reihe R5a analog zu dem zweiten Vorsprung 26b der ersten Reihe R1a jeweils einen ersten Vorsprung 28b, 30b, 32b, 34b auf.

Ferner weisen die zweite Reihe R2a, die dritte Reihe R3a, die vierte Reihe R4a und die fünfte Reihe R5a analog zu dem dritten Vorsprung 26c der ersten Reihe R1a jeweils einen dritten Vorsprung 28c, 30c, 32c, 34c auf.

Der erste Vorsprung 26a, 28a, 30a, 32a, 34a jeder ersten Reihe R1a, R2a, R3a, R4a, R5a sind jeweils in einer zur Höhenrichtung H des Grillgeräts 1 parallelen Ebene E3 angeordnet. Ferner sind die zweiten Vorsprünge 26a, 28a, 30a, 32a, 34a jeder der Reihen R1a, R2a, R3a, R4a, R5a in einer zur Höhenrichtung H des Grillgeräts 1 parallelen Ebene E4 angeordnet.

Darüber hinaus sind die dritten Vorsprünge 26c, 28c, 30c, 32c, 34c jeder der Reihen R1a, R2a, R3a, R4a, R5a in einer zur Höhenrichtung H des Grillgeräts 1 parallelen Ebene E5 angeordnet.

Die Abstände A1 zwischen der ersten Reihe R1a und der zweiten Reihe R2a sowie zwischen der zweiten Reihe R2a und der dritten Reihe R3a sind identisch. Der Abstand A2 der vierten Reihe R4a zur dritten Reihe R3a ist größer als der Abstand A1 zwischen der ersten Reihe R1a und der zweiten Reihe R2a sowie zwischen der zweiten Reihe R2a und der dritten Reihe R3a.

Darüber hinaus ist der Abstand A3 zwischen der vierten Reihe R4a und der fünften Reihe R5a wiederum größer als der Abstand A2 zwischen der dritten Reihe R3a und der vierten Reihe R4a.

Die Mehrzahl von gestanzten Vorsprüngen 26a, 26b, 26c, 28a, 28b, 28c, 30a, 30b, 30c, 32a, 32b, 32c, 34a, 34b, 34c der ersten Seitenwand 22 weisen jeweils identische Abmessungen auf und sind im Montagezustand zu den jeweiligen Vorsprüngen der (in Fig. 3 nicht gezeigten) zweiten Seitenwand 24 gegenüber bzw. bezüglich einer Mittellängsebene des Grillinnenraums spiegelsymmetrisch angeordnet. Die Vorsprünge weisen ferner einen gewölbten, im Wesentlichen konvexen Querschnitt auf.

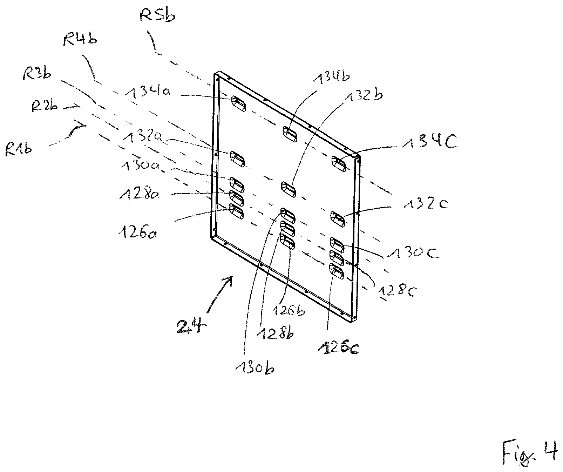

Fig. 4 zeigt eine schematische Ansicht einer zweiten Seitenwand des Grillgeräts gemäß der bevorzugten Ausführungsform der Erfindung.

Die erste Seitenwand 22 des Grillinnenraums 12 weist in der vorliegenden Ausführungsform eine erste Reihe R1b auf, welche einen ersten gestanzten Vorsprung, einen zweiten gestanzten Vorsprung und einen dritten gestanzten Vorsprung aufweist, welche in einer zur Längsrichtung L des Grillgeräts 1 parallelen Ebene angeordnet sind.

Des Weiteren sind eine zweite Reihe R2b, eine dritte Reihe R3b, eine vierte Reihe R4b und eine fünfte Reihe R5b vorgesehen, welche in weiteren zur Längsrichtung L des Grillgeräts parallelen Ebenen angeordnet sind.

Die zweite Reihe R2b, die dritte Reihe R3b, die vierte Reihe R4b und die fünfte Reihe R5b weisen analog zum ersten gestanzten Vorsprung 126a der ersten Reihe R1b ebenfalls jeweils einen ersten gestanzten Vorsprung 128a, 130a, 132a, 134a auf.

Ferner weisen die zweite Reihe R2b, die dritte Reihe R3b, die vierte Reihe R4b und die fünfte Reihe R5b analog zu dem zweiten Vorsprung 126b der ersten Reihe R1b jeweils einen ersten Vorsprung 128b, 130b, 132b, 134b auf.

Ferner weisen die zweite Reihe R2b, die dritte Reihe R3b, die vierte Reihe R4b und die fünfte Reihe R5b analog zu dem dritten Vorsprung 126c der ersten Reihe R1b jeweils einen dritten Vorsprung 128c, 130c, 132c, 134c auf.

Der erste Vorsprung 126a, 128a, 130a, 132a, 134a jeder ersten Reihe R1b, R2b, R3b, R4b, R5b sind jeweils in einer zur Höhenrichtung H des Grillgeräts 1 parallelen Ebene angeordnet. Ferner sind die zweiten Vorsprünge 126a, 128a, 130a, 132a, 134a jeder der Reihen R1b, R2b, R3b, R4b, R5b in einer zur Höhenrichtung H des Grillgeräts 1 parallelen Ebene angeordnet.

Darüber hinaus sind die dritten Vorsprünge 126c, 128c, 130c, 132c, 134c jeder der Reihen R1b, R2b, R3b, R4b, R5b in einer zur Höhenrichtung H des Grillgeräts 1 parallelen Ebene angeordnet.

Die Abstände zwischen der ersten Reihe R1b und der zweiten Reihe R2b sowie zwischen der zweiten Reihe R2b und der dritten Reihe R3b sind identisch. Der Abstand der vierten Reihe R4b zur dritten Reihe R3b ist größer als der Abstand zwischen der ersten Reihe R1b und der zweiten Reihe R2b sowie zwischen der zweiten Reihe R2b und der dritten Reihe R3b.

Darüber hinaus ist der Abstand zwischen der vierten Reihe R4b und der fünften Reihe R5b wiederum größer als der Abstand zwischen der dritten Reihe R3b und der vierten Reihe R4b.

Obwohl hierin spezifische Ausführungsformen illustriert und beschrieben wurden, ist es dem Fachmann verständlich, dass eine Mehrzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne von dem Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargelegten Ausführungsformen abzudecken.

## Patentansprüche

1. Grillgerät (1) zum Garen oder Grillen von Grillgut, umfassend ein Gehäuse (10) mit einem Grillinnenraum (12), welcher durch eine offene Frontseite (12a) zugänglich ist, einen Heizstrahler (14), der an einer Decke (16) des Grillinnenraums (12) angeordnet ist, einen im Grillinnenraum (12) angeordneten Grillrost (18), und eine im Grillinnenraum (12) angeordnete Haltevorrichtung (20) zum Halten des Grillrosts (18), **dadurch gekennzeichnet, dass** die Haltevorrichtung (20) eine Mehrzahl von an gegenüberliegenden Seitenwänden (22, 24) des Grillinnenraums (12) ausgebildeten, gestanzten Vorsprüngen (26a, 126a, 26b, 126b, 26c, 126c, 28a, 128a, 28b, 128b, 28c, 128c, 30a, 130a, 30b, 130b, 30c, 130, 32a, 132a, 32b, 132b, 32c, 132c, 34a, 134a, 34b, 134b, 34c, 134c) aufweist.

2. Grillgerät nach Anspruch 1, **dadurch gekennzeichnet, dass** eine erste Seitenwand (22) des Grillinnenraums (12) zumindest einen ersten gestanzten Vorsprung (26a) und einen zweiten gestanzten Vorsprung (26b) aufweist, welche in einer zur Längsrichtung (L) des Grillgeräts (1) parallelen Ebene (E1) angeordnet sind.

3. Grillgerät nach Anspruch 2, **dadurch gekennzeichnet, dass** eine zur ersten Seitenwand (22) im Montagezustand gegenüberliegend angeordnete zweite Seitenwand (24) des Grillinnenraums (12) zumindest einen ersten gestanzten Vorsprung (126a) und einen zweiten gestanzten Vorsprung (126b) aufweist, welche in einer zur Längsrichtung (L) des Grillgeräts parallelen Ebene (E2) angeordnet sind.

4. Grillgerät nach Anspruch 3, **dadurch gekennzeichnet, dass** die erste Seitenwand (22) und die zweite Seitenwand (24) des Grillinnenraums (12) einen dritten gestanzten Vorsprung (26c, 126c) aufweisen, welcher in derselben Ebene wie der erste gestanzte Vorsprung (26a, 126a) und der zweite gestanzte Vorsprung (26b, 126b) angeordnet ist.

5. Grillgerät nach Anspruch 4, **dadurch gekennzeichnet, dass** die erste Seitenwand (22) und die zweite Seitenwand (24) des Grillinnenraums (12) eine Mehrzahl von Reihen (R1a, R1b, R2a, R2b, R3a, R3b, R4a, R4b, R5a, R5b) von Vorsprüngen (26a, 126a, 26b, 126b, 26c, 126c, 28a, 128a, 28b, 128b, 28c, 128c, 30a, 130a, 30b, 130b, 30c, 130, 32a, 132a, 32b, 132b, 32c, 132c, 34a, 134a, 34b, 134b, 34c, 134c) aufweisen, wobei der erste gestanzte Vorsprung (26a, 126b) der ersten Reihe (R1a, R1b) zu einem ersten gestanzten Vorsprung (28a, 128a, 30a, 130a, 32a, 132a, 34a, 134a) jeder weiteren Reihe (R2a, R2b, R3a, R3b, R4a, R4b, R5a, R5b) in einer zur Höhenrichtung (H) des Grillgeräts (1) parallelen Ebene (E3) angeordnet ist.

6. Grillgerät nach Anspruch 5, **dadurch gekennzeichnet, dass** der zweite gestanzte Vorsprung (26b, 126b) der ersten Reihe (R1a, R1b) zu einem zweiten gestanzten Vorsprung (28b, 128b, 30b, 130b, 32b, 132b, 34b, 134b) jeder weiteren Reihe (R2a, R2b, R3a, R3b, R4a, R4b, R5a, R5b) in einer zur Höhenrichtung (H) des Grillgeräts (1) parallelen Ebene (E4) angeordnet ist, und wobei der dritte gestanzte Vorsprung (26c, 126c) der ersten Reihe (R1a, R1b) zu einem dritten gestanzten Vorsprung jeder weiteren Reihe (R2a, R2b, R3a, R3b, R4a, R4b, R5a, R5b) in einer zur Höhenrichtung des Grillgeräts parallelen Ebene (E5) angeordnet ist.

7. Grillgerät nach Anspruch 5 oder 6, **dadurch gekennzeichnet, dass** die erste Reihe (R1a, R1b), eine zweite Reihe (R2a, R2b) und eine dritte Reihe (R3a, R3b) der Mehrzahl von Reihen (R1a, R1b, R2a, R2b, R3a, R3b, R4a, R4b, R5a, R5b) von Vorsprüngen (26a, 126a, 26b, 126b, 26c, 126c, 28a, 128a, 28b, 128b, 28c, 128c, 30a, 130a, 30b, 130b, 30c, 130, 32a, 132a, 32b, 132b, 32c, 132c, 34a, 134a, 34b, 134b, 34c, 134c) einen gleichmäßigen ersten Abstand (A1) voneinander aufweisen.

8. Grillgerät nach Anspruch 7, **dadurch gekennzeichnet, dass** eine vierte Reihe (R4a, R4b) der Mehrzahl von Reihen (R1a, R1b, R2a, R2b, R3a, R3b, R4a, R4b, R5a, R5b) von Vorsprüngen (26a, 126a, 26b, 126b, 26c, 126c, 28a, 128a, 28b, 128b, 28c, 128c, 30a, 130a, 30b, 130b, 30c, 130, 32a, 132a, 32b, 132b, 32c, 132c, 34a, 134a, 34b, 134b, 34c, 134c) einen gegenüber dem ersten Abstand (A1) vergrößerten zweiten Abstand (A2) von der benachbarten dritten Reihe (R3a, R3b) aufweist, und wobei eine fünfte Reihe (R5a, R5b) der Mehrzahl von Reihen (R1a, R1b, R2a, R2b, R3a, R3b, R4a, R4b, R5a, R5b) von Vorsprüngen (26a, 126a, 26b, 126b, 26c, 126c, 28a, 128a, 28b, 128b, 28c, 128c, 30a, 130a, 30b, 130b, 30c, 130, 32a, 132a, 32b, 132b, 32c, 132c, 34a, 134a, 34b, 134b, 34c, 134c) einen gegenüber dem zweiten Abstand (A2) vergrößerten dritten Abstand (A3) von der benachbarten vierten Reihe (R4a, R4b) aufweist.

9. Grillgerät nach einem der vorhergehenden Ansprüche, **dadurch gekennzeichnet, dass** die Mehrzahl von an gegenüberliegenden Seitenwänden (22, 24) des Grillinnenraums (12) ausgebildeten, gestanzten Vorsprüngen (26a, 126a, 26b, 126b, 26c, 126c, 28a, 128a, 28b, 128b, 28c, 128c, 30a, 130a, 30b, 130b, 30c, 130, 32a, 132a, 32b, 132b, 32c, 132c, 34a, 134a, 34b, 134b, 34c, 134c) identische Abmessungen aufweisen und gegenüber einer Mittellängsebene des Grillinnenraums (12) spiegelsymmetrisch angeordnet sind.

10. Grillgerät nach Anspruch 9, **dadurch gekennzeichnet, dass** die Mehrzahl von an gegenüberliegenden Seitenwänden (22, 24) des Grillinnenraums (12) ausgebildeten, gestanzten Vorsprüngen (26a, 126a, 26b, 126b, 26c, 126c, 28a, 128a, 28b, 128b, 28c, 128c, 30a, 130a, 30b, 130b, 30c, 130, 32a, 132a, 32b, 132b, 32c, 132c, 34a, 134a, 34b, 134b, 34c, 134c) einen gewölbten, im Wesentlichen konvexen, Querschnitt aufweisen.
